# EUROPÄISCHE PATENTSCHRIFT

(11) **EP 3 617 353 B1**
(45) Veröffentlichungstag und Bekanntmachung des Hinweises auf die Patenterteilung: **09.10.2024**
(21) Anmeldenummer: 18191459.9
(22) Anmeldetag: 29.08.2018
(51) Int. Cl.: D01G 25/00, B65G 15/52

(54) **VLIESLEGER MIT EINEM ABLIEFERTRANSPORTBAND**
A LAP-FORMING DEVICE WITH A DELIVERY TRANSPORT BELT
UN ÉTALEUR-NAPPEUR COMPRENANT UNE BANDE TRANSPORTEUSE DE LIVRAISON

(43) Veröffentlichungstag der Anmeldung: 04.03.2020
(73) Patentinhaber: Oskar Dilo Maschinenfabrik KG, 69412 Eberbach (DE)
(72) Erfinder: Dilo, Johann Philipp, 69412 Eberbach (DE)
(74) Vertreter: Wächter, Jochen

(56) Entgegenhaltungen:
- EP-A1- 1 947 223
- DE-B- 1 292 549
- DE-C- 76 457
- DE-U1- 29 518 917
- SU-A1- 825 707
- US-A- 1 554 838

## Beschreibung

Die Erfindung betrifft einen Vliesleger mit einem Abliefertransportband.

Bei der Vliesherstellung werden in einem Vliesleger mehrere Lagen eines in den Vliesleger eintretenden Faserflors übereinander auf ein senkrecht zur Fahrtrichtung des Legewagens bewegbares Abliefertransportband des Vlieslegers abgelegt. Aufgrund der senkrecht zueinander gerichteten Bewegungen von Legewagen und Abliefertransportband verlaufen die einzelnen Florränder des gelegten Vlieses auf dem Abliefertransportband leicht schräg. Insgesamt werden mehrere Florlagen aufeinander im Zickzack abgelegt, wodurch das aus diesen mehreren Florlagen bestehende Vlies gebildet wird.

Aufgrund verschiedener Anforderungen kann es gewünscht sein, dass der Flor vor dem Vliesleger oder beim Durchlauf durch den Vliesleger gezielt verstreckt wird. Beispielsweise ist dies vorteilhaft, um im Bereich der Seitenränder des gelegten Vlieses dünnere Florabschnitte abzulegen, was zu einem gleichmäßigeren Vlies nach der Verfestigung führt. Allerdings ergibt sich aus den Verzügen wegen der elastisch gespeicherten Dehnung des Flors ein Eigenspannungsniveau im Material. Diese Eigenspannungen können das gelegte Vlies derart verzerren, dass z.B. die letzte Florlage elastisch einspringt und damit eine Verringerung der Legebreite stattfindet. Insbesondere am hinteren Florrand der zum jeweiligen Zeitpunkt zuletzt abgelegten Florlage trifft der Flor zum Teil direkt auf die Querlatten des Abliefertransportbands. Dort ist dieser Effekt besonders auffällig.

DE 295 18 917 U1 offenbart ein Lattenförderband eines Vlieslegers, wobei die Transportseite der Latten eine für Fasern haftende und wahlweise profilierte Oberfläche aufweist, um die Lage der von dem Vliesleger abgelegten Faserschichten zu fixieren. Die haftende Fläche kann z.B. durch Koextrusion von Weich-PVC, Aufgummieren oder Aufkleben einer Polyurethanschicht gebildet werden.

Weiterhin offenbart DE 12 92 549 B ein Förderband, das mit einem Florstoffbelag versehen ist, um die Haftung der Fasern auf den Förderbändern zu verbessern und dadurch eine exakte Ablage des Flors und dessen Verbleib in der gewünschten Ablagestellung zu verbessern.

US 1 554 838 A offenbart ein Förderband, das in einem Winkel nach oben angeordnet ist. Das Förderband umfasst eine Mehrzahl von in Querrichtung angeordneten Latten, die abwechselnd mit einem runden Profil und mit einem spitzkantigen Profil ausgebildet sind.

SU 825 707 A1 offenbart ein Förderband, das aus einem Bandelement besteht, wobei direkt an dem Bandelement eine Mehrzahl von Borsten angeordnet ist.

DE 76 457 C offenbart bewegliche Klappenelemente, die dazu eingerichtet sind, einen Luftstrom im Bereich eines Vlieslegers zu verhindern. Die Klappenelemente sind weiterhin mit einem Plüschüberzug versehen, um einerseits einen Aufprall der Klappenelemente an dem Abliefertransportband abzumildern und andererseits an dem Abliefertransportband haftende Fasern zu entfernen.

Ein Vliesleger nach dem Stand der Technik ist aus EP 1 947 223 A1 bekannt.

Der vorliegenden Erfindung liegt die Aufgabe zugrunde, einen Vliesleger mit einem Abliefertransportband zu schaffen, das wirkungsvoll einem Einsprung des gelegten Vlieses aufgrund von Eigenspannungen im Vlies entgegenwirkt, gleichzeitig das gelegte Vlies schont und bei einer Übergabe des Vlieses vom Abliefertransportband an eine nachgeschaltete Fördervorrichtung das Vlies möglichst rückstandsfrei wieder freigibt.

Diese Aufgabe wird durch die Merkmale des Anspruchs 1 gelöst.

Das Abliefertransportband des erfindungsgemäßen Vlieslegers zur Aufnahme und Förderung von zu einem Vlies gelegten Florlagen ist als endlos umlaufendes Lattenband mit einer Vielzahl von Querlatten ausgebildet. Die Querlatten weisen Auflageflächen für das Vlies auf, wobei die Auflageflächen von zumindest einigen der Querlatten zumindest abschnittsweise durch von den Querlatten abstehende Fasern oder Borsten gebildet sind.

Mit dieser Ausgestaltung wird gewährleistet, dass sich die Legekante der Florlagen beim Legen des Vlieses nicht verkürzt. Gleichzeitig wird ein Zerkratzen der empfindlichen glatten Oberfläche der Legebänder des Vlieslegers, die teilweise mit dem Abliefertransportband in Kontakt kommen können, vermieden. Schließlich wird damit gewährleistet, dass durch die erhöhten Reib- und Formschlusskräfte zwischen Vlies und Abliefertransportband eine Formstabilität des Vlieses bis zur Übergabe an das nächste Transportmittel gewährleistet ist.

Vorzugsweise sind die Querlatten zumindest teilweise mit einer Abdeckung bedeckt, die abstehende Fasern oder Borsten aufweist. Dadurch ist gewährleistet, dass das Abliefertransportband mit oder ohne abstehende Fasern oder Borsten verwendet werden kann.

Weiterhin bevorzugt weist die Abdeckung eine Trägerschicht auf, von der die Fasern oder Borsten abragen.

Vorzugsweise ragen die Fasern über eine Höhe von 0,5 mm bis 5 mm, mehr bevorzugt über eine Höhe von 1,0 bis 4,0 mm, von der Trägerschicht ab.

Die Abdeckung ist vorzugsweise aus einer Polware mit abstehenden Fasern gebildet. In bevorzugten Ausgestaltungen ist die Polware ein Samt oder ein Velours.

In alternativen Ausgestaltungen können die Fasern in Form einer Faserbeflockung auf die Trägerschicht aufgebracht sein.

Die Trägerschicht kann mindestens eine Klebeschicht aufweisen, um eine einfache Verbindung mit den Querlatten zu ermöglichen.

In einer bevorzugten Ausgestaltung ist jede Querlatte mit der Abdeckung bedeckt. Alternativ kann auch nur jede zweite oder jede dritte Querlatte mit der Abdeckung bedeckt sein.

In einer ersten Variante sind die Querlatten über die gesamte Breite des Abliefertransportbandes mit den Fasern oder Borsten ausgestattet.

In einer alternativen Variante weisen die Querlatten in äußeren Bereichen eine Abdeckung auf, während die Querlatten in einem Mittelbereich nicht mit der Abdeckung bedeckt sind. Dies kann ausreichen, weil die Verzüge in erster Linie am Rand der gelegten Vliesbahn auftreten. Wenn das Vlies dort an einem Einsprung gehindert wird, wird damit auch der Mittelbereich der gelegten Vliesbahn fixiert.

Dieser freie Mittelbereich erstreckt sich vorzugsweise über höchstens 70%, mehr bevorzugt höchstens 60%, noch mehr bevorzugt höchstens 50% der Breite des Abliefertransportbandes.

Neben der Ausführungsformen mit einer Abdeckung der Querlatten ist es auch möglich, dass die Borsten in Form von Borstenbüscheln vorliegen und bevorzugt direkt an den Querlatten befestigt sind.

In einer bevorzugten Ausgestaltung ist in einem Bereich des Abliefertransportbandes eine Reinigungseinrichtung zur Ablösung von anhaftenden Fasern des Vlieses angeordnet. Aufgrund der relativ hohen Reib- und Formschlusskräfte des Abliefertransportbandes können Fasern des Vlieses auch nach der Übergabe des Vlieses vom Abliefertransportband an die nachgeordnete Transporteinheit weiterhin an den Fasern oder Borsten des Abliefertransportbands haften. Es kann somit notwendig sein, diese anhaftenden Fasern des Vlieses zu entfernen, damit das Abliefertransportband beim nächsten Ablegevorgang auf diesen Querlatten wieder die gewünschte Haltekraft für das Vlies liefert.

In bevorzugten Ausgestaltungen kann die Reinigungseinrichtung als Bürstenwalze und/oder als Absaugeinrichtung ausgebildet sein.
- Fig. 1: ist eine schematische Seitenansicht eines erfindungsgemäßen Vlieslegers mit Abliefertransportband;
- Fig. 2: ist eine schematische Draufsicht auf ein Abliefertransportband, bei dem ein unerwünschter Einsprung der Vliesränder schematisch dargestellt ist;
- Fig. 3: ist eine Perspektivansicht eines Ausschnitts eines Obertrums eines Abliefertransportbands des erfindungsgemäßen Vlieslegers;
- Fig. 4: ist eine Querschnittsansicht einer Ausgestaltung einer Querlatte des Abliefertransportbands mit Abdeckung aus Fig. 3; und
- Fig. 5: ist eine Querschnittsansicht einer alternativen Ausgestaltung einer Querlatte des Abliefertransportbands mit Borstenbüscheln.

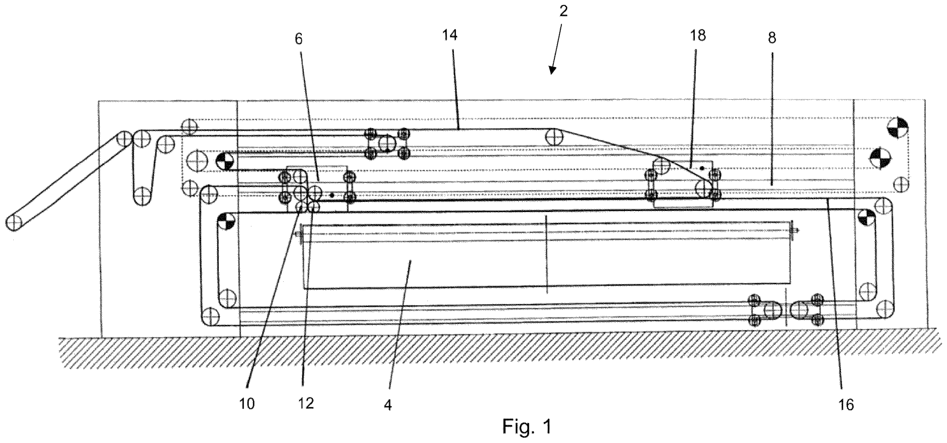

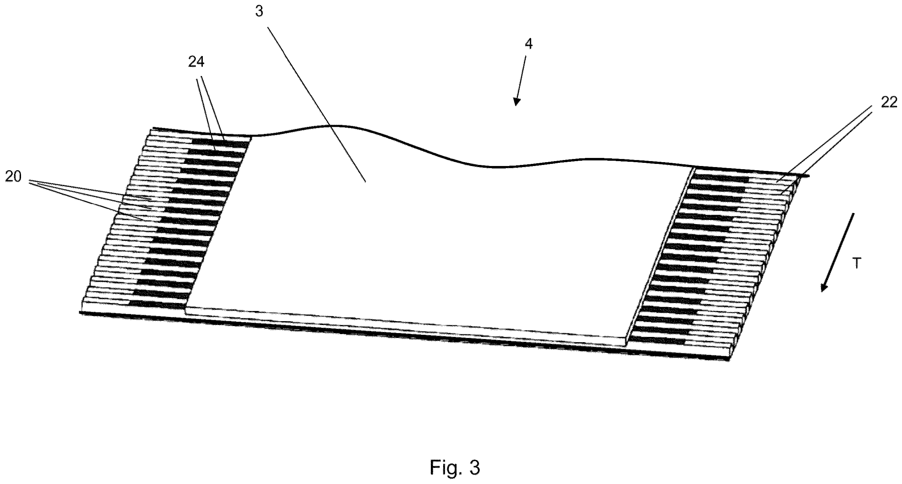

Fig. 1 zeigt eine schematische Ansicht eines Vlieslegers 2 in einer in Bezug auf ein Abliefertransportband 4 stirnseitigen Ansicht. Das endlos umlaufende Abliefertransportband 4 ist dazu bestimmt, ein gelegtes Vlies 3 (siehe Fig. 3) in einer senkrecht zur Zeichnungsebene verlaufenden Transportrichtung T (siehe Fig. 3) abzutransportieren. Über dem Abliefertransportband 4 ist ein Legewagen 6 auf Schienen oder Rohren 8 hin und her verfahrbar, in dem zwischen zwei Walzen 10, 12 ein Ablegespalt für die Florbahn (nicht dargestellt) ausgebildet ist. Die Florbahn wird im Vliesleger 2 mittels mindestens zwei Flortransportbändern 14, 16 zu diesem Ablegespalt geführt. Im vorliegenden Beispiel ist der Vliesleger 2 als Flachtäfler ausgebildet, bei dem ein im Wesentlichen auf einer Höhe mit dem Legewagen 6 angeordneter Oberwagen 18 ebenfalls quer zur Transportrichtung des Abliefertransportbandes 4 auf Schienen oder Rohren 8 verfahrbar gelagert ist. Die Schienen oder Rohre 8 können dieselben Schienen oder Rohre sein, an denen auch der Legewagen 6 verfahrbar gelagert ist. Im Betrieb, wenn der Legewagen 6 eine über dem Abliefertransportband 4 hin- und hergehende Bewegung ausführt, führt der Oberwagen 18 eine dazu gleichläufige, wenn auch langsamere Bewegung aus.

Die Bewegungen von Legewagen 6 und Oberwagen 18 sind so aufeinander abgestimmt, dass bei Zuführung der Florbahn in den Vliesleger 2 eine gesteuerte Ablage der Florlagen innerhalb des dargestellten Vlieslegers 2 auf dem Abliefertransportband 4 stattfinden kann. Dabei bewegt sich der Oberwagen 18 jeweils in dieselbe Richtung, im Mittel jedoch nur halb so schnell wie der Legewagen 6. Es wird auch der Tatsache Rechnung getragen, dass der Legewagen 6 im Bereich seiner Bewegungsumkehrstellung bis zum Stillstand abgebremst und wieder beschleunigt werden muss. Wird die Florbahn mit schwankender Geschwindigkeit zugeführt, etwa weil vor dem Vliesleger 2 eine Verzugseinrichtung (nicht dargestellt), insbesondere ein zyklisch arbeitendes Streckwerk, angeordnet ist, die eine wechselnde Dicke in der Florbahn zum Zwecke der Erzielung einer Querprofilierung des gelegten Vlieses 3 erzeugt, kann mit Hilfe einer voneinander unabhängigen Steuerung der Bewegung von Oberwagen 18 und Legewagen 6 in bekannter Weise eine Florbahnpufferung innerhalb des Vlieslegers 2 vorgenommen werden. Es ist auch möglich, die Florbahn innerhalb des Vlieslegers 2 durch aufeinander abgestimmte Bewegungen des Oberwagens 18 und des Legewagens 6 gezielt zu verziehen.

Gemäß dem in Fig. 1 dargestellten Ausführungsbeispiel sind neben dem Abliefertransportband 4 drei Flortransportbänder im Vliesleger 2 enthalten. Die Erfindung lässt sich aber auch auf alle anderen Vliesleger, u.a. solche mit zwei Flortransportbändern, anwenden. Die Erfindung ist ebenfalls auf gegenläufige Vliesleger anzuwenden, bei denen sich der Oberwagen 18 und der Legewagen 6 entgegengesetzt bewegen, sowie auf Steilarmvliesleger.

Allen Vlieslegern 2 ist gemeinsam, dass der Legewagen 6 an den Umkehrpunkten seiner Bewegung zum Stillstand abgebremst wird und anschließend wieder in die entgegengesetzte Richtung beschleunigt werden muss. Während dieser Abbrems- und Beschleunigungsphase wird in modernen Vlieslegern 2 auch die Geschwindigkeit der Florbahnablage entsprechend reduziert, um Randverdickungen im gelegten Vlies 3 zu vermeiden. Gleichzeitig wird auch das Abliefertransportband 4 auf gesteuerte Weise an diesen Bewegungszyklus angepasst und wird somit zu den Zeiten, wenn der Legewagen 6 abgebremst und in die Gegenrichtung wieder beschleunigt wird, ebenfalls entsprechend langsamer. Dies ist notwendig, um einen präzisen Lagenschluss der Florlagen auch an den Rändern des Vlieses 3 zu gewährleisten. Die Geschwindigkeit des Abliefertransportbands 4 kann dabei bis auf null sinken. Insgesamt ergibt sich also für das Abliefertransportband 4 eine getaktete Bewegung mit variablen Geschwindigkeitsverläufen.

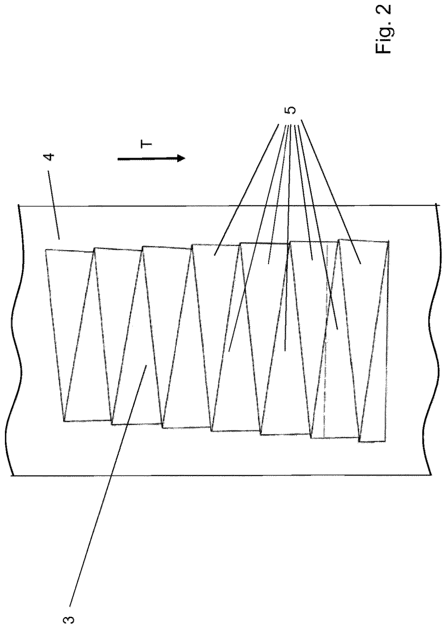

Wie in Fig. 2 dargestellt ist, kann bei der Zick-Zack-Ablage der Florlagen 5 auf dem Abliefertransportband 4 der eingangs beschriebene unerwünschte Einsprung aufgrund der Eigenspannung im Fasermaterial der jeweils zuletzt abgelegten Florlage 5 stattfinden. Erfindungsgemäß wäre hingegen gewünscht, die in Fig. 2 dargestellte Konfiguration so zu ändern, dass alle Florlagen 5 sich über dieselbe Breite, d.h. die unten in Fig. 2 dargestellte Ausgangsbreite, erstrecken.

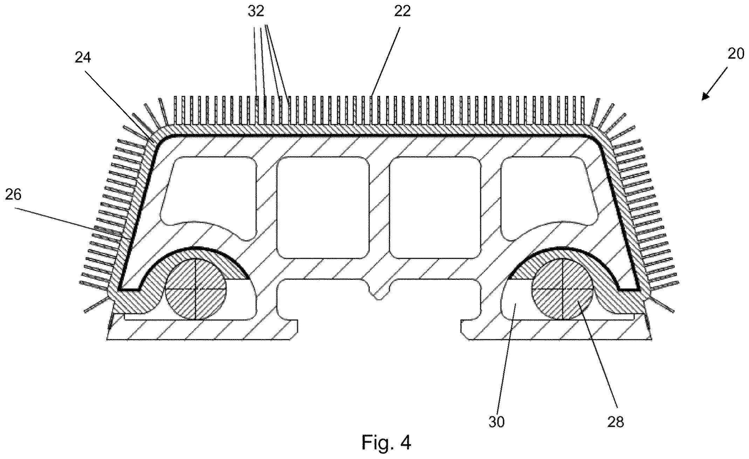

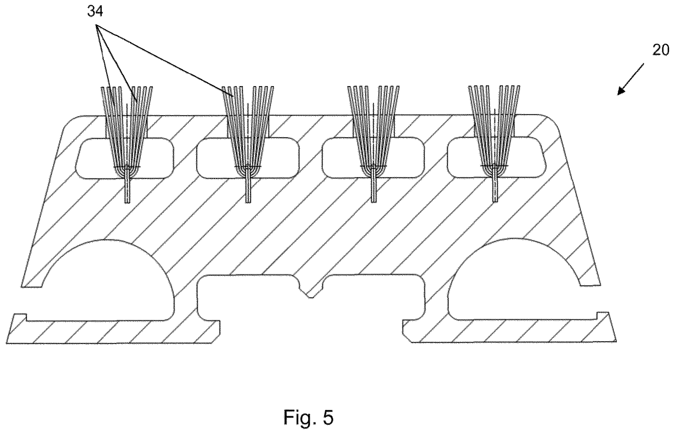

Eine erste Ausgestaltung des hierzu verwendeten Abliefertransportbands 4 des erfindungsgemäßen Vlieslegers ist in Fig. 3 und 4 dargestellt. Eine weitere Ausgestaltung ist in Fig. 5 dargestellt.

In Fig. 3 ist ein Ausschnitt des Obertrums des endlos umlaufenden Abliefertransportbandes 4 dargestellt. Das Abliefertransportband 4 ist als endlos umlaufendes Lattenband mit einer Vielzahl von Querlatten 20 ausgebildet. Die Querlatten 20 sind bevorzugt aus Kunststoff gebildet.

Das Vlies 3 liegt auf Auflageflächen 22 der Querlatten 20 im Bereich eines Obertrums des Abliefertransportbandes 4 auf. Jede Auflagefläche 22 der Querlatten 20 ist mit einer Abdeckung 24 bedeckt, die in Fig. 3 schwarz gekennzeichnet ist. An den äußersten Randbereichen des Abliefertransportbandes 4 befindet sich üblicherweise ein Streifen, der nicht für die Ablage des Vlieses 3 verwendet wird. Hier kann die Abdeckung 24 entfallen, wie in Fig. 3 dargestellt ist. Ebenso ist es denkbar, dass die Querlatten 20 über ihre gesamte Länge mit der Abdeckung 24 bedeckt sind.

Schließlich ist es auch denkbar, dass - möglicherweise abgesehen vom ungenutzten Randstreifen - in äußeren Bereichen der Querlatten 20 eine Abdeckung 24 vorliegt, während in einem Mittelbereich der Querlatten 20 keine Abdeckung 24 vorgesehen ist. Der freie Mittelbereich erstreckt sich höchstens über 70% der Breite des Abliefertransportbandes 4. Auf der Abdeckung 24 liegt das Vlies 3 sowohl durch Reibung als auch durch Formschluss gehalten auf.

Aus Gründen der Wirtschaftlichkeit muss in anderen Ausgestaltungen nicht jede Querlatte 20, sondern kann auch nur jede zweite, dritte, vierte oder fünfte Querlatte 20 mit einer Abdeckung 24 versehen sein.

Das Abliefertransportband 4 ist üblicherweise über einen verzahnten Eingriff mit mindestens einer Antriebswalze (nicht dargestellt) verbunden und läuft zudem um weitere Umlenkwalzen um. In einem Bereich des Abliefertransportbandes 4 außerhalb der Vliesauflagestrecke, bevorzugt im Bereich des Untertrums des Abliefertransportbandes 4, ist vorzugsweise eine Reinigungseinrichtung (nicht dargestellt) zur Ablösung von anhaftenden Fasern des Vlieses 3 angeordnet. Die Reinigungseinrichtung kann beispielsweise als Bürstenwalze und/oder als Absaugeinrichtung ausgebildet sein.

Die Querlatten 20 sind zumindest teilweise mit einer Abdeckung 24 bedeckt, die abstehende Fasern 32 aufweist. Ebenfalls ist es möglich, dass die Abdeckung 24 abstehende Borsten aufweist. Auf diese Weise sind die Auflageflächen 22 von zumindest einigen der Querlatten 20 zumindest abschnittsweise durch von den Querlatten 20 abstehende Fasern 32 oder Borsten gebildet. Üblicherweise weist die Abdeckung 24 eine Trägerschicht 26 auf, von der die Fasern 32 oder Borsten abragen.

Meist weist die Abdeckung 24 somit Fasern 32, auch in Form von Filamenten oder Garnen, auf, die von einer Trägerschicht 26 abstehen und in die dritte Dimension ragen. In besonders bevorzugten Ausführungsformen ist das Material der Abdeckung 24 eine "Polware". Polware weist allgemein zumindest teilweise vertikal verlaufende Fasern 32 und/oder einen "Strich" (Schrägneigung) der Fasern 32 auf. Unter "Polware" fallen beispielsweise Samte und Velours-Materialien.

Für die Abdeckung 24 kommen auch geraschelte Materialien, getuftete Materialien, gewebte Materialien, gewirkte oder gestrickte Materialien als Material in Frage, sofern davon Fasern 32 nach oben abragen.

Schließlich ist es auch denkbar, dass die abragenden Fasern 32 in Form einer Faserbeflockung auf die Trägerschicht 26 aufgebracht sind. In diesem Fall kommt als Trägermaterial Kunststoff, Holz, Metall oder eine textile Schicht in Frage.

Alle Fasern 32 sind Kurzfasern, die lediglich über eine Höhe von 0,5 mm bis 5 mm, vorzugsweise über eine Höhe von 1,0 bis 4,0 mm, von der Trägerschicht 26 abragen.

Borsten hingegen sind deutlich länger und stehen über eine Höhe von zwischen 5 mm und 50 mm von der Trägerschicht 26 ab.

In Fig. 4 ist ein Beispiel einer Befestigungsmöglichkeit der Abdeckung 24 an einer Querlatte 20 des Abliefertransportbands 4 abgebildet. Dabei wird die Abdeckung 24 einerseits mit der Klebeschicht der Trägerschicht 26 klebend mit der Querlatte 20 verhaftet, zusätzlich aber noch durch eine Dichtschnur 28 formschlüssig in Aussparungen 30 der Querlatte 20 gehalten.

Selbstverständlich existieren für den Fachmann viele weitere Optionen, die Abdeckung 24 an der Querlatte 20 zu befestigen, beispielsweise nur mittels Verklebung, mittels Verschraubung oder mittels Verschraubung und Verklebung.

Fig. 5 zeigt eine alternative Ausgestaltung einer Querlatte 20, bei der Borsten 34 in Form von Borstenbüscheln direkt an der Querlatte 20 befestigt sind. Bei der Verwendung von Borsten 34 muss demnach nicht zwangsläufig eine Trägerschicht 26 vorhanden sein. Die Befestigung der Borstenbüschel an der Querlatte 20 kann durch mechanische Fixierung und/oder Verklebung erfolgen. Hierbei ist auf eine ausreichende Anzahl und Dichte der Borstenbüschel zu achten, damit die von den Borsten 34 gebildete Auflagefläche 22 für das Vlies keine größeren Durchhänge des Vlieses 3 erlaubt.

Die Borsten 34 stehen über eine Höhe von zwischen 5 mm und 50 mm von der Querlatte 20 ab.

## Patentansprüche

1. Vliesleger (2) mit einem Abliefertransportband (4) zur Aufnahme und Förderung von zu einem Vlies (3) gelegten Florlagen (5), wobei über dem Abliefertransportband (4) ein Legewagen (6) auf Schienen oder Rohren (8) hin und her verfahrbar ist, in dem zwischen zwei Walzen (10, 12) ein Ablegespalt für die Florbahn ausgebildet ist,
**dadurch gekennzeichnet, dass**
das Abliefertransportband (4) als endlos umlaufendes Lattenband mit einer Vielzahl von Querlatten (20) ausgebildet ist, wobei die Querlatten (20) Auflageflächen (22) für das Vlies (3) aufweisen,
und wobei die Auflageflächen (22) von zumindest einigen der Querlatten (20) zumindest abschnittsweise durch von den Querlatten (20) abstehende Fasern (32) oder Borsten (34) gebildet sind.

2. Vliesleger (2) nach Anspruch 1, **dadurch gekennzeichnet, dass** die Querlatten (20) zumindest teilweise mit einer Abdeckung (24) bedeckt sind, die abstehende Fasern (32) oder Borsten (34) aufweist.

3. Vliesleger (2) nach Anspruch 2, **dadurch gekennzeichnet, dass** die Abdeckung (24) eine Trägerschicht (26) aufweist, von der die Fasern (32) oder Borsten (34) abragen.

4. Vliesleger (2) nach Anspruch 3, **dadurch gekennzeichnet, dass** die Fasern (32) über eine Höhe von 0,5 mm bis 5 mm, vorzugsweise über eine Höhe von 1,0 bis 4,0 mm, von der Trägerschicht (26) abragen.

5. Vliesleger (2) nach einem der Ansprüche 2 bis 4, **dadurch gekennzeichnet, dass** die Abdeckung (24) aus einer Polware mit abstehenden Fasern (32) gebildet ist.

6. Vliesleger (2) nach Anspruch 5, **dadurch gekennzeichnet, dass** die Polware ein Samt oder ein Velours ist.

7. Vliesleger (2) nach Anspruch 3 oder 4, **dadurch gekennzeichnet, dass** die Fasern (32) in Form einer Faserbeflockung auf die Trägerschicht (26) aufgebracht sind.

8. Vliesleger (2) nach einem der Ansprüche 3 bis 7, **dadurch gekennzeichnet, dass** die Trägerschicht (26) mindestens eine Klebeschicht aufweist.

9. Vliesleger (2) nach einem der Ansprüche 2 bis 8, **dadurch gekennzeichnet, dass** jede Querlatte (20) mit der Abdeckung (24) bedeckt ist.

10. Vliesleger (2) nach einem der Ansprüche 2 bis 8, **dadurch gekennzeichnet, dass** jede zweite oder jede dritte Querlatte (20) mit der Abdeckung (24) bedeckt ist.

11. Vliesleger (2) nach einem der vorangehenden Ansprüche, **dadurch gekennzeichnet, dass** die Querlatten (20) über die gesamte Breite des Abliefertransportbandes (4) mit den Fasern (32) oder Borsten (34) ausgestattet sind.

12. Vliesleger (2) nach einem der Ansprüche 2 bis 10, **dadurch gekennzeichnet, dass** die Querlatten (20) in äußeren Bereichen des Abliefertransportbands (4) eine Abdeckung (24) aufweisen, während die Querlatten (20) in einem Mittelbereich nicht mit der Abdeckung (24) bedeckt sind.

13. Vliesleger (2) nach Anspruch 12, **dadurch gekennzeichnet, dass** der nicht mit der Abdeckung (24) versehene Mittelbereich sich über höchstens 70%, bevorzugt höchstens 60%, mehr bevorzugt höchstens 50% der Breite des Abliefertransportbandes (4) erstreckt.

14. Vliesleger (2) nach Anspruch 1, **dadurch gekennzeichnet, dass** die Borsten (34) in Form von Borstenbüscheln vorliegen und bevorzugt direkt an den Querlatten (20) befestigt sind.

15. Vliesleger (2) nach einem der vorangehenden Ansprüche, **dadurch gekennzeichnet, dass** in einem Bereich des Abliefertransportbandes (4) eine Reinigungseinrichtung zur Ablösung von anhaftenden Fasern des Vlieses (3) angeordnet ist, die bevorzugt als Bürstenwalze und/oder als Absaugeinrichtung ausgebildet ist.

## Claims

1. Lap-forming device (2) with a delivery transport belt (4) for receiving and conveying batt plies (5) laid to form a nonwoven fabric (3), wherein, above the delivery transport belt (4), a laying carriage (6) is movable to and fro on rails or tubes (8), in which a laying nip for the batt web is formed between two rollers (10, 12), **characterized in that** the delivery transport belt (4) is in the form of an endlessly revolving slatted belt with a multiplicity of transverse slats (20), wherein the transverse slats (20) have support surfaces (22) for the nonwoven fabric (3), and wherein the support surfaces (22) of at least some of the transverse slats (20) are formed at least in certain sections by fibres (32) or bristles (34) protruding from the transverse slats (20).

2. Lap-forming device (2) according to Claim 1, **characterized in that** the transverse slats (20) are at least partially covered with a covering (24) which has protruding fibres (32) or bristles (34).

3. Lap-forming device (2) according to Claim 2, **characterized in that** the covering (24) has a backing layer (26) from which the fibres (32) or bristles (34) protrude.

4. Lap-forming device (2) according to Claim 3, **characterized in that** the fibres (32) protrude over a height of 0.5 mm to 5 mm, preferably over a height of 1.0 to 4.0 mm, from the backing layer (26).

5. Lap-forming device (2) according to one of Claims 2 to 4, **characterized in that** the covering (24) is formed from a pile fabric with protruding fibres (32).

6. Lap-forming device (2) according to Claim 5, **characterized in that** the pile fabric is velvet or velour.

7. Lap-forming device (2) according to Claim 3 or 4, **characterized in that** the fibres (32) are applied in the form of fibre flocking to the backing layer (26).

8. Lap-forming device (2) according to one of Claims 3 to 7, **characterized in that** the backing layer (26) has at least one adhesive layer.

9. Lap-forming device (2) according to one of Claims 2 to 8, **characterized in that** each transverse slat (20) is covered with the covering (24).

10. Lap-forming device (2) according to one of Claims 2 to 8, **characterized in that** every second or every third transverse slat (20) is covered with the covering (24).

11. Lap-forming device (2) according to one of the preceding claims, **characterized in that** the transverse slats (20) over the entire width of the delivery transport belt (4) are provided with the fibres (32) or bristles (34).

12. Lap-forming device (2) according to one of Claims 2 to 10, **characterized in that** the transverse slats (20) in outer regions of the delivery transport belt (4) have a covering (24), whereas the transverse slats (20) in a central region are not covered with the covering (24).

13. Lap-forming device (2) according to Claim 12, **characterized in that** the central region which is not provided with the covering (24) extends over at most 70%, preferably at most 60%, more preferably at most 50% of the width of the delivery transport belt (4).

14. Lap-forming device (2) according to Claim 1, **characterized in that** the bristles (34) are present in the form of bristle bundles and are preferably fastened directly to the transverse slats (20).

15. Lap-forming device (2) according to one of the preceding claims, **characterized in that** a cleaning device, preferably in the form of a brush roller and/or a suction device, for removing adhering fibres of the nonwoven fabric (3) is arranged in a region of the delivery transport belt (4).

## Revendications

1. Étaleur-nappeur (2) avec une bande transporteuse de livraison (4) pour la réception et le transport de couches de poils (5) posées en un non-tissé (3), un chariot de pose (6) pouvant être déplacé en va-et-vient sur des rails ou des tubes (8) au-dessus de la bande transporteuse de livraison (4), dans lequel une fente de pose pour la bande de poils est réalisée entre deux cylindres (10, 12),
**caractérisé en ce que**
la bande transporteuse de livraison (4) est réalisée sous forme de bande à lattes circulant sans fin avec une pluralité de lattes transversales (20), les lattes transversales (20) présentant des surfaces d'appui (22) pour le non-tissé (3),
et
les surfaces d'appui (22) d'au moins certaines des lattes transversales (20) étant formées au moins par sections par des fibres (32) ou des poils (34) dépassant des lattes transversales (20).

2. Étaleur-nappeur (2) selon la revendication 1, **caractérisé en ce que** les lattes transversales (20) sont au moins partiellement recouvertes d'un recouvrement (24) qui présente des fibres (32) ou des poils (34) en saillie.

3. Étaleur-nappeur (2) selon la revendication 2, **caractérisé en ce que** le recouvrement (24) présente une couche de support (26) à partir de laquelle les fibres (32) ou les poils (34) font saillie.

4. Étaleur-nappeur (2) selon la revendication 3, **caractérisé en ce que** les fibres (32) font saillie de la couche de support (26) sur une hauteur de 0,5 mm à 5 mm, de préférence sur une hauteur de 1,0 à 4,0 mm.

5. Étaleur-nappeur (2) selon l'une quelconque des revendications 2 à 4, **caractérisé en ce que** le recouvrement (24) est formé d'un tissu à poils avec des fibres (32) en saillie.

6. Étaleur-nappeur (2) selon la revendication 5, **caractérisé en ce que** le tissu à poils est un velours ou un velours synthétique.

7. Étaleur-nappeur (2) selon la revendication 3 ou 4, **caractérisé en ce que** les fibres (32) sont appliquées sur la couche de support (26) sous la forme d'un flocage de fibres.

8. Étaleur-nappeur (2) selon l'une quelconque des revendications 3 à 7, **caractérisé en ce que** la couche de support (26) présente au moins une couche adhésive.

9. Étaleur-nappeur (2) selon l'une quelconque des revendications 2 à 8, **caractérisé en ce que** chaque latte transversale (20) est recouverte par le recouvrement (24) .

10. Étaleur-nappeur (2) selon l'une quelconque des revendications 2 à 8, **caractérisé en ce que** chaque deuxième ou chaque troisième latte transversale (20) est recouverte par le recouvrement (24).

11. Étaleur-nappeur (2) selon l'une quelconque des revendications précédentes, **caractérisé en ce que** les lattes transversales (20) sont munies des fibres (32) ou des poils (34) sur toute la largeur de la bande transporteuse de livraison (4).

12. Étaleur-nappeur (2) selon l'une quelconque des revendications 2 à 10, **caractérisé en ce que** les lattes transversales (20) présentent un recouvrement (24) dans des zones extérieures de la bande transporteuse de livraison (4), tandis que les lattes transversales (20) ne sont pas recouvertes du recouvrement (24) dans une zone centrale.

13. Étaleur-nappeur (2) selon la revendication 12, **caractérisé en ce que** la zone centrale non pourvue du recouvrement (24) s'étend sur au plus 70 %, de préférence au plus 60 %, plus préférentiellement au plus 50 % de la largeur de la bande transporteuse de livraison (4).

14. Étaleur-nappeur (2) selon la revendication 1, **caractérisé en ce que** les poils (34) se présentent sous forme de touffes de poils et sont de préférence fixés directement aux lattes transversales (20).

15. Étaleur-nappeur (2) selon l'une quelconque des revendications précédentes, **caractérisé en ce qu'**un dispositif de nettoyage pour détacher les fibres adhérentes du non-tissé (3) est agencé dans une zone de la bande transporteuse de livraison (4), lequel est de préférence réalisé sous forme de rouleau-brosse et/ou sous forme de dispositif d'aspiration.
